# EUROPÄISCHE PATENTSCHRIFT

(11) **EP 0 598 244 B1**
(45) Veröffentlichungstag und Bekanntmachung des Hinweises auf die Patenterteilung: **31.01.1996**
(21) Anmeldenummer: 93117121.9
(22) Anmeldetag: 22.10.1993
(51) Int. Cl.: D06P 3/32, C09B 35/28

(54) **Verfahren zum Färben von Leder mit einem roten Azofarbstoff**
Process for dyeing of leather with a red azo dyestuff
Procédé de teinture dU cuir avec un colorant azoique rouge

(30) Priorität: 19.11.1992 DE 4238903
(43) Veröffentlichungstag der Anmeldung: 25.05.1994
(73) Patentinhaber: BASF Aktiengesellschaft, D-67063 Ludwigshafen (DE)
(72) Erfinder: Dix, Johannes Peter, Dr., D-6719 Weisenheim (DE); Lamm, Gunther, Dr., D-6733 Hassloch (DE); Reichelt, Helmut, Dr., D-6730 Neustadt (DE); Zeidler, Georg, D-6701 Dannstadt-Schauernheim (DE)

(56) Entgegenhaltungen:
- DE-C- 742 662
- FR-A- 2 006 305

## Beschreibung

Die vorliegende Erfindung betrifft ein neues Verfahren zum Färben von Leder in rotem Farbton mittels eines Sulfonsäuregruppen aufweisenden Azofarbstoffs.

Es ist bekannt, daß metallfreie, saure Azofarbstoffe sich in vielen Fällen zum Färben von Leder eignen. Häufig werden diese Farbstoffe, insbesondere auf stärker nachgegerbten Ledern, ungenügend fixiert, so daß schlechte Badausziehung sowie nicht ausreichende Schweiß- und Waschechtheiten resultieren.

Aufgabe der vorliegenden Erfindung war es, ein neues Verfahren zum Färben von Leder bereitzustellen, wobei ein Sulfonsäuregruppen aufweisender Azofarbstoff zur Anwendung gelangen sollte. Das mit diesem Farbstoff gefärbte Leder sollte gute Gebrauchseigenschaften aufweisen. Außerdem sollte der im neuen Verfahren angewandte Farbstoff eine hohe Badausziehung besitzen, d.h. die nach dem Färbeprozeß resultierende Färbeflotte sollte annähernd frei von Farbstoff sein.

Es wurde nun gefunden, daß das Färben von Leder vorteilhaft gelingt, wenn man das Leder mit dem Farbstoff der Formel 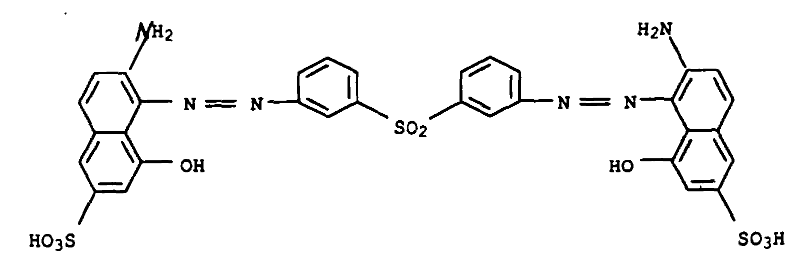 behandelt.

Als zu färbendes Leder kommt im allgemeinen handelsübliches mineralisch (z.B. auf Basis der Metalle Chrom, Aluminium, Titan oder Zirkonium) gegerbtes Leder oder auch metallfrei gegerbtes Leder (z.B. rein vegetabiles Leder) in Betracht. Solche Lederarten werden z.B. für die Herstellung von Lederbekleidung, als Polsterleder oder als Schuhoberleder verwendet.

Die Behandlung des Leders mit dem obengenannten Farbstoff erfolgt im allgemeinen in wäßriger Flotte. Bezogen auf das Trockengewicht des Leders kommen dabei in der Regel 0,5 bis 15 Gew.-%, vorzugsweise 1 bis 8 Gew.-%, des Farbstoffs zur Anwendung. Der Farbstoff ist dabei in der wäßrigen Färbeflotte gelöst.

Das erfindungsgemäße Verfahren wird üblicherweise bei einer Temperatur von 25 bis 60°C, vorzugsweise 30 bis 55 °C, vorgenommen.

Zweckmäßig führt man das neue Verfahren so durch, daß man das zu färbende Leder, z.B. nachgegerbtes Chromrindleder, zunächst neutralisiert, was beispielsweise durch Walken des Leders in wäßriger Alkalihydrogencarbonat- und Alkaliformiatlösung geschehen kann. Das neutralisierte Leder wird dann mit Wasser gewaschen und bei der obengenannten Temperatur mit einer den Farbstoff enthaltenden wäßrigen Flotte durch Walken behandelt. Nachdem der Färbevorgang beendet ist, was in der Regel 30 bis 90 Minuten in Anspruch nimmt, wird der Färbeflotte ein Fettlicker zugegeben und die Behandlung für 30 bis 60 Minuten fortgesetzt. Schließlich wird die Färbeflotte angesäuert, z.B. mit Ameisensäure, das Leder noch 30 bis 60 Minuten gewalkt, mit Wasser gespült, ausgereckt, getrocknet, gestollt und gespannt.

Der Farbstoff kann in den bekannten Färbeverfahren in Form handelsüblicher Einstellungen, z.B. mit Natriumsulfat oder Dextrinen, verwendet werden. Er kann aber auch in Form einer vorwiegend wäßrigen Flüssigeinstellung zur Anwendung gelangen.

In seiner salzfreien oder salzarmen Form eignet sich der obengenannte Farbstoff auch vorteilhaft zum Spritzfärben von Leder.

Mittels des erfindungsgemäßen Verfahrens erhält man Leder, das in einem klaren, kräftigen roten Farbton gefärbt ist. Das so gefärbte Leder weist gute Naßechtheiten auf und verfügt über eine hohe Lichtechtheit. Besonders hervorzuheben ist, daß der im neuen Verfahren zur Anwendung gelangende Farbstoff eine ausgezeichnete Badausziehung besitzt.

Der im neuen Verfahren zur Anwendung kommende Farbstoff ist aus den DE-C-742 662 bekannt. Es wird dort zum Färben von Wolle empfohlen. Über seine Anwendung zum Färben von Leder werden keine Aussagen gemacht, und es war auch nicht zu erwarten, daß bei dieser Anwendung die oben näher aufgeführten vorteilhaften Eigenschaften resultieren würden.

Die folgenden Beispiele sollen die Erfindung näher erläutern.

### Beispiel 1 (Herstellung)

374 g 3,3'-Diaminodiphenylsulfon wurden in üblicher Weise wäßrigsalzsauer mit Natriumnitrit tetrazotiert. Nach Zerstören überschüssiger salpetrige Säure hob man den pH-Wert der Diazoniumsalzlösung mit Natriumformiat auf 2,5 bis 3 an und gab die erhaltene Diazoniumsalzlösung innerhalb von 2 Stunden zu einer frisch hergestellten Suspension von 735 g 2-Amino-8-hydroxynaphthalin-6-sulfonsäure in 2700 ml Wasser, die einen pH-Wert von 2 bis 2,5 aufwies. Die Kupplungsreaktion wurde mit Natriumformiat bei einem pH-Wert von 1,5 bis 2,5 gehalten und war nach ca. 8 Stunden bei einer Temperatur von 25°C beendet. Der ausgefallende Farbstoff wurde abgesaugt, mit wenig schwefelsaurem Wasser (pH-Wert: 1) gewaschen und dann getrocknet. Man erhielt 1300 g eines roten Pulvers, das noch 4 Gew.-% Natriumchlorid und ca. 0,5 bis 1 Gew.-% Schwefelsäure enthielt.

Der Farbstoff kann durch Dialyse in eine salzfreie Form übergeführt werden. Er eignet sich dann sehr gut für die Spritzfärbung von Leder oder im Ink-Jet-Verfahren.

### Beispiel 2 (Anwendung)

100 g eines nachgegerbten Chromrindleders mit einer Falzstärke von 14 mm wurden in 200 ml Wasser bei 30°C mit 1 g Natriumhydrogencarbonat und 1 g Natriumformiat durch 45-minütiges Walken in einem Wackerfaß neutralisiert. Das Leder wurde dann durch 15-minütiges Walken in 200 ml frischem Wasser bei 30°C gewaschen. Anschließend wurde die Färbung durch 45-minütiges Walken in 200 ml Wasser, das eine Temperatur von 50°C aufwies und 1 Gew.-% des in Beispiel 1 beschriebenen Farbstoffes enthielt, vorgenommen.

Danach wurden 4 g eines handelsüblichen Fettlickers zugegeben und die Walke für 30 Minuten fortgesetzt. Nach dem Ansäuern mit 0,5 g Ameisensäure wurde das Leder weitere 30 Minuten gewalkt, dann mit kaltem Wasser gespült, ausgereckt, getrocknet, gespannt, gestollt und gespannt. Man erhielt ein in klarem, kräftigen Rot gefärbtes Leder. Die Färbung weist gute Lichtechtheit und gute Naßechtheiten auf. Die Färbeflotte ist praktisch frei von Farbstoff.

## Patentansprüche

1. Verfahren zum Färben von Leder, dadurch gekennzeichnet, daß man das Leder mit dem Farbstoff der Formel 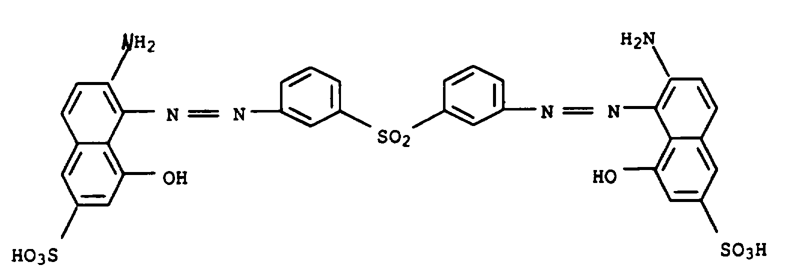 behandelt.

## Claims

1. A process for dyeing leather, which comprises treating the leather with the dye of the formula

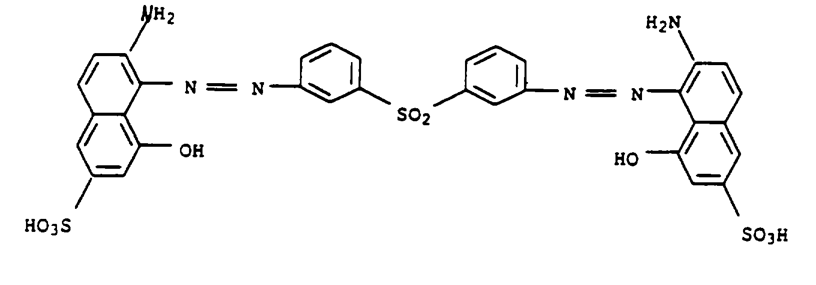

## Revendications

1. Procédé pour teindre le cuir, caractérisé en ce qu'on traite le cuir par le colorant de formule
